# EUROPÄISCHE PATENTANMELDUNG

(11) **EP 2 966 324 A1**
(43) Veröffentlichungstag der Anmeldung: **13.01.2016**
(21) Anmeldenummer: 15169391.8
(22) Anmeldetag: 27.05.2015
(51) Int. Cl.: F16K 1/44, F16K 11/044

(54) **VENTIL UND VERFAHREN ZUM FREIGEBEN/VERSCHLIESSEN EINER FLUIDPASSAGE**

(30) Priorität: 11.07.2014 DE 102014213511
(71) Anmelder: ROBERT BOSCH GMBH, 70442 Stuttgart (DE)
(72) Erfinder: Paske Te, Mark, 7423 Deventer (NL)

(57) **Zusammenfassung**

Ventil (1) und entsprechendes Verfahren mit einem in einem Ventilkörper (20) bewegbar gelagerten Ventilglied (10) zum Freigeben/Verschließen eines Durchtrittsquerschnitts (22) im Ventilkörper (20) für das Fluid (2), wobei vom Ventilglied (10) beim Freigeben und/oder Verschließen des Durchtrittsquerschnitts (22) zwei Fluidkanäle (115) im Ventil (1) sukzessive freigebbar und/oder sukzessive verschließbar sind.

## Beschreibung

Die Erfindung betrifft ein Ventil, bevorzugt ein 3/2-Wegeventil, für eine Beeinflussung eines Volumenstroms eines Fluids in der Fluidtechnik, insbesondere der Thermotechnik. Ferner betrifft die Erfindung ein Verfahren zum Freigeben/Verschließen einer Fluidpassage durch ein Ventil, bevorzugt ein 3/2-Wegeventil, zum Beeinflussen eines Volumenstroms eines Fluids. Des Weiteren betrifft die Erfindung eine Einrichtung, eine Vorrichtung, ein Gerät oder ein System für die Fluidtechnik, insbesondere die Thermotechnik, mit einem erfindungsgemäßen Ventil und/oder mittels welcher bzw. mittels welchem ein erfindungsgemäßes Verfahren durchführbar ist.

### Stand der Technik

In der Fluidtechnik, insbesondere der Thermotechnik, wie z. B. beim zentralen oder dezentralen Energiemanagement im Automotive- oder Non-Automotive-Bereich, insbesondere in (Wohn-)Gebäuden sowie für Klein-, Mittel- und/oder Großanlagen im verarbeitenden Gewerbe und in der Industrie, wird nach energieeffizienten Lösungen z. B. für Prozessfluide/-wasser und/oder ein Raumklima (Kühlmittel, Kältemittel, Warm-/Heißwasser, Öle, Brauchwasser, Luft etc.) gesucht. Ein effizientes Management solcher Technologien in offenen oder geschlossenen Kreisläufen, insbesondere unter Ausnutzung von Niedertemperaturwärme, ermöglicht eine Reduzierung von klimaschädlichen Kohlenstoffdioxid-Emissionen.

Für ein flüssiges oder gasförmiges Medium - nachfolgend meist als Fluid bezeichnet -, wie z. B. Wasser oder Luft, werden für eine betreffende Einrichtung, eine Vorrichtung, ein Gerät oder ein System diverse Ventile oder Stellglieder zur Steuerung, Regelung und/oder Verschaltung des Fluids eingesetzt. Hierbei kommen sowohl anzusteuernde bzw. einzuregelnde Digital- oder diskret schaltende Ventile oder auch kontinuierlich zu steuernde bzw. zu regelnde Proportionalventile zum Einsatz. In der Regel werden für diese weit verbreiteten Ventile reversible, d. h. hin- und hergehende Stellglieder verwendet. Solche Stellglieder sind elektrisch, elektromotorisch, hydraulisch oder auch mechanisch betätigbar bzw. antreibbar.

Bei Ventilen bzw. Stellgliedern, im Besonderen bei 3/2-Wegeventilen, stehen sich, insbesondere bei sich mit einem im Wesentlichen parallel zu einer Fluidflussrichtung bewegenden Ventilglied des Ventils bzw. Stellglieds, meist zwei Anforderungen hauptsächlich unvereinbar gegenüber. Dies ist einerseits ein Wunsch nach einem geringen Druckverlust am/im Ventil bzw. Stellglied, bzw. zwischen dem Ventilglied und einem Ventilsitz des Ventils bzw. Stellglieds. Andererseits ist dies ein Wusch nach einem hohen Differenzdruck beim Freigeben bzw. Verschließen des Ventils bzw. Stellglieds.

Der Druckverlust (Δp) im Ventil hängt im Wesentlichen von einem Durchmesser (d) eines Fluidkanals im Ventil ab (Δp ∼ d⁻⁵), und der maximal erlaubte Differenzdruck (Δp) am Ventilsitz des Ventils hängt von einer Stellkraft (F) eines Stell- oder Schrittmotors bzw. -antrieb und dem Durchmesser (d) des Fluidkanals ab (Δp ∼ π·F·d²). - Eine typische Stellkraft des Stell- oder Schrittmotors bzw. -antrieb ist oft nicht ausreichend, beide Kriterien zur vollen Zufriedenheit zu erfüllen. Daher wird ein Druckverlust innerhalb des Ventils in Kauf genommen, was seinerseits jedoch zu einer höheren Pumpenenergie führt, um eine benötigte Durchflussrate durch das Ventil hindurch erzielen zu können.

### Aufgabenstellung

Es ist eine Aufgabe der Erfindung, ein verbessertes Ventil, insbesondere ein verbessertes 3/2-Wegeventil für eine Beeinflussung eines Fluidvolumenstroms in der Fluidtechnik, insbesondere der Thermotechnik, anzugeben. Ferner ist es eine Aufgabe der Erfindung, ein verbessertes Verfahren zum Freigeben/Verschließen einer Fluidpassage mittels eines Ventils, bevorzugt eines 3/2-Wegeventils, zum Beeinflussen eines Volumenstroms eines Fluids anzugeben. Des Weiteren ist es eine Aufgabe der Erfindung, eine entsprechend verbesserte Einrichtung, eine Vorrichtung, ein Gerät oder ein System anzugeben. Hierbei sollen die eingangsgenannten Kriterien für das Ventil besser als im Stand der Technik erfüllt werden können, wobei das erfindungsgemäße Ventil einfach aufgebaut und kostengünstig in dessen Herstellung, Montage und Wartung sein soll.

### Offenbarung der Erfindung

Die Aufgabe der Erfindung ist mittels eines Ventils, bevorzugt eines 3/2-Wegeventils, für eine Beeinflussung eines Volumenstroms eines Fluids in der Fluidtechnik, insbesondere der Thermotechnik, gemäß Anspruch 1; durch ein Verfahren zum Freigeben/Verschließen einer Fluidpassage durch ein Ventil, bevorzugt ein 3/2-Wegeventil, zum Beeinflussen eines Volumenstroms eines Fluids in der Fluidtechnik, insbesondere der Thermotechnik, gemäß Anspruch 9; und einer Einrichtung, einer Vorrichtung, einem Gerät oder einem System gemäß Anspruch 12 gelöst. Vorteilhafte Weiterbildungen, zusätzliche Merkmale und/oder Vorteile der Erfindung ergeben sich aus den abhängigen Ansprüchen und der folgenden Beschreibung.

Das erfindungsgemäße Ventil weist ein in einem Ventilkörper bewegbar gelagertes Ventilglied zum Freigeben/Verschließen eines Durchtrittsquerschnitts im Ventilkörper für das Fluid auf, wobei vom Ventilglied beim Freigeben und/oder Verschließen des Durchtrittsquerschnitts zwei unterschiedliche Fluidkanäle im Ventil sukzessive freigebbar und/oder sukzessive verschließbar sind. Gemäß der Erfindung erfolgt beim Freigeben und/oder Verschließen des einzelnen Durchtrittsquerschnitts mittels des Ventilglieds zeitlich vor einem vollständigen Freigeben und/oder zeitlich vor einem vollständigen Verschließen des Durchtrittsquerschnitts ein Druckausgleich am Durchtrittsquerschnitt. Der Druckausgleich erfolgt dabei durch einen ersten Fluidkanal, wohingegen ein zweiter Fluidkanal noch verschlossen ist. Bevorzugt ist das Ventil als ein diskret schaltendes Ventil oder ein Digitalventil ausgebildet.

Gemäß der Erfindung kann der erste Fluidkanal des Ventils am und/oder im Ventilglied vorgesehen sein, wobei der erste Fluidkanal bevorzugt zwischen einem ersten Dichtelement und wenigstens einem zweiten Dichtelement des Ventilglieds beim Freigeben und/oder Verschließen des Durchtrittsquerschnitts freigebbar und/oder verschließbar ist. Ferner kann gemäß der Erfindung der zweite Fluidkanal des Ventils zwischen dem Ventilglied und dem Ventilkörper vorgesehen sein, wobei der zweite Fluidkanal bevorzugt zwischen dem ersten Dichtelement und dem Ventilkörper beim Freigeben und/oder Verschließen des Durchtrittsquerschnitts freigebbar und/oder verschließbar ist. Das Ventilglied ist dabei im Wesentlichen ausschließlich translatorisch im Ventilkörper bewegbar.

Beim Freigeben des einzelnen Durchtrittsquerschnitts kann zunächst der erste Fluidkanal und in der zeitlichen Folge der zweite Fluidkanal sukzessive freigegeben werden, wobei bei einem freigegebenem zweiten Fluidkanal der erste Fluidkanal bevorzugt wieder verschließbar ist oder der erste Fluidkanal bevorzugt in einer freigegebenen Stellung verbleibt. - Beim Verschließen des einzelnen Durchtrittsquerschnitts kann zunächst der zweite Fluidkanal und in einer zeitlichen Folge der erste Fluidkanal sukzessive verschließbar sein. Ferner kann beim Verschließen des Durchtrittsquerschnitts zunächst der erste Fluidkanal und in einer zeitlichen Folge der zweite Fluidkanal sukzessive verschließbar sein. Des Weiteren können beim Verschließen des Durchtrittsquerschnitts beide Fluidkanäle im Wesentlichen synchron verschließbar sein.

In Ausführungsformen der Erfindung kann das erste Dichtelement beweglich an einem Ventilschaft des Ventilglieds aufgenommen sein, wobei das zweite Dichtelement und bevorzugt ein drittes Dichtelement fest am Ventilschaft des Ventilglieds aufgenommen ist bzw. sind. Hierbei kann das erste Dichtelement beweglich zwischen dem zweiten Dichtelement und dem dritten Dichtelement aufgenommen sein, oder das erste Dichtelement kann beweglich zwischen dem zweiten Dichtelement und einem Anschlag am Ventilschaft des Ventilglieds aufgenommen sein, wobei der Anschlag bevorzugt integral, einstückig, einteilig oder mehrteilig mit dem Ventilschaft ausgebildet sein kann.

Das erste Dichtelement kann einen Außenring zum Fluiddichten mit einem Ventilsitz des Ventils und eine Innenscheibe zum Fluiddichten mit dem zweiten Dichtelement und/oder dem dritten Dichtelement umfassen, wobei das erste Dichtelement bevorzugt zweiteilig ausgebildet ist und die Innenscheibe im Außenring festgelegt, insbesondere in den Außenring eingepresst ist. Eine einteilige, einstückige oder integrale Ausbildung des ersten Dichtelements ist natürlich möglich. Bevorzugt sind das zweite Dichtelement und das dritte Dichtelement bzw. der Anschlag im Wesentlichen analog oder im Wesentlichen identisch ausgebildet.

Gemäß der Erfindung kann das erste Dichtelement oder die Innenscheibe des ersten Dichtelements eine Fluidausnehmung für einen Durchtritt des Fluids durch den ersten Fluidkanal aufweisen. Solch eine Fluidausnehmung ist auch im dritten Dichtelement bzw. im Anschlag einrichtbar. Ferner kann das erste Dichtelement oder die Innenscheibe des ersten Dichtelements am Ventilschaft zentriert geführt sein, wobei der Ventilschaft bevorzugt eine Begrenzung der Fluidausnehmung im ersten Dichtelement oder in der Innenscheibe des ersten Dichtelements bildet.

Das Ventil kann derart ausgebildet sein, dass das Ventilglied in und/oder entgegen dessen Betätigungsrichtung mittels eines Energiespeichers, bevorzugt mittels einer Feder, insbesondere einer Spiralfeder, bevorzugt mechanisch vorgespannt, d. h. kraftbeaufschlagt, ist. Gemäß der Erfindung kann das Ventil ein mit einem Fluiddruck oder ein in einer Fluidflussrichtung öffnendes Ventil, ein gegen einen Fluiddruck oder ein entgegen einer Fluidflussrichtung öffnendes Ventil, oder als ein nach innen oder ein nach außen öffnendes Ventil ausgebildet sein. Das Ventil kann dabei als ein Wegeventil, z. B. als ein 2/2- (zwei Anschlüsse/ zwei Schaltstellungen), ein 3/2-, ein 3/3-, ein 4/2-, ein 4/3-Wegeventil etc. ausgebildet sein.

Bei dem erfindungsgemäßen Verfahren zum Freigeben/Verschließen einer Fluidpassage durch ein Ventil wird beim Freigeben und/oder Verschließen die Fluidpassage in wenigstens zwei aufeinander folgenden, bevorzugt diskreten Schritten mehr freigegeben und/oder mehr verschlossen. Gemäß der Erfindung wird beim Freigeben und/oder Verschließen der Fluidpassage durch das Ventil, ein Durchtrittsquerschnitt des Ventils für das Fluid durch ein Ventilglied des Ventils in wenigstens zwei aufeinander folgenden Schritten sukzessive mehr freigegeben und/oder sukzessive mehr verschlossen. In Ausführungsformen des erfindungsgemäßen Verfahrens kann die Fluidpassage beim Verschließen durch das Ventil in einem einzigen Schritt geschlossen werden.

Ein einzelner Durchtrittsquerschnitt des Ventils kann für das Fluid durch ein Freigeben/Verschließen zweier unterschiedlicher Fluidkanäle im Ventil sukzessive freigebbar und/oder sukzessive verschließbar sein. Das durch die Fluidpassage hindurchtretende Fluid kann ein flüssiges oder gasförmiges Medium, insbesondere eine wasser- oder ölbasierte Flüssigkeit sein. Bevorzugt ist das erfindungsgemäße Verfahren mittels eines erfindungsgemäßen Ventils durchführbar bzw. wird mittels des erfindungsgemäßen Verfahrens durchgeführt. - Die erfindungsgemäße Einrichtung, die erfindungsgemäße Vorrichtung, das erfindungsgemäße Gerät oder das erfindungsgemäße System weist ein erfindungsgemäßes Ventil auf und/oder ist derart ausgebildet, dass durch sie bzw. durch es ein erfindungsgemäßes Verfahren durchführbar ist und/oder durchgeführt wird.

### Kurzbeschreibung der Figuren

Die Erfindung ist im Folgenden anhand von Ausführungsbeispielen unter Bezugnahme auf die beigefügte schematische und nicht maßstabsgetreue Zeichnung näher erläutert. Elemente oder Bauteile, welche eine identische, univoke oder analoge Ausbildung und/oder Funktion besitzen, sind in der Beschreibung mit denselben Bezugszeichen versehen und/oder in den Figuren (Fig.) der Zeichnung mit denselben Bezugszeichen gekennzeichnet. Sämtliche erläuterten Merkmale sind nicht nur in der angegebenen Kombination bzw. den angegebenen Kombinationen, sondern auch in einer anderen Kombination bzw. anderen Kombinationen oder in Alleinstellung anwendbar. In den Fig. der Zeichnung zeigen:
- Fig. 1: in einer zweidimensionalen, allseitig weggebrochenen, zentralen Schnittansicht eine erste Ausführungsform eines erfindungsgemäßen Ventils in dessen vollständiger Schließstellung;
- Fig. 2: in einer zur Fig. 1 identischen Schnittansicht, das erfindungsgemäße Ventil aus Fig. 1 beim Freigeben, wobei ein erstes Dichtelement des Ventils noch an dessen Ventilsitz ansitzt;
- Fig. 3: ebenfalls in einer zur Fig. 1 identischen Schnittansicht, das erfindungsgemäße Ventil aus Fig. 1 in einer vollständigen Offenstellung, wobei sich das erste Dichtelement von dessen Ventilsitz wegbewegt hat;
- Fig. 4: in einer zweidimensionalen, zentralen Schnittansicht eine zweite Ausführungsform des erfindungsgemäßen Ventils, wobei das erste Dichtelement vollständig an einem ersten Ventilsitz ansitzt;
- Fig. 5: das erfindungsgemäße Ventil aus Fig. 4 in einer zur Fig. 4 identischen Schnittansicht, wobei das erste Dichtelement vollständig an einem zweiten Ventilsitz ansitzt; und
- Fig. 6: eine obere bzw. eine untere Ansicht auf ein erfindungsgemäßes erstes Dichtelement des Ventils, wobei das erste Dichtelement aus einer in einem Außenring vorgesehenen Innenscheibe konstituiert ist.

### Ausführungsformen der Erfindung

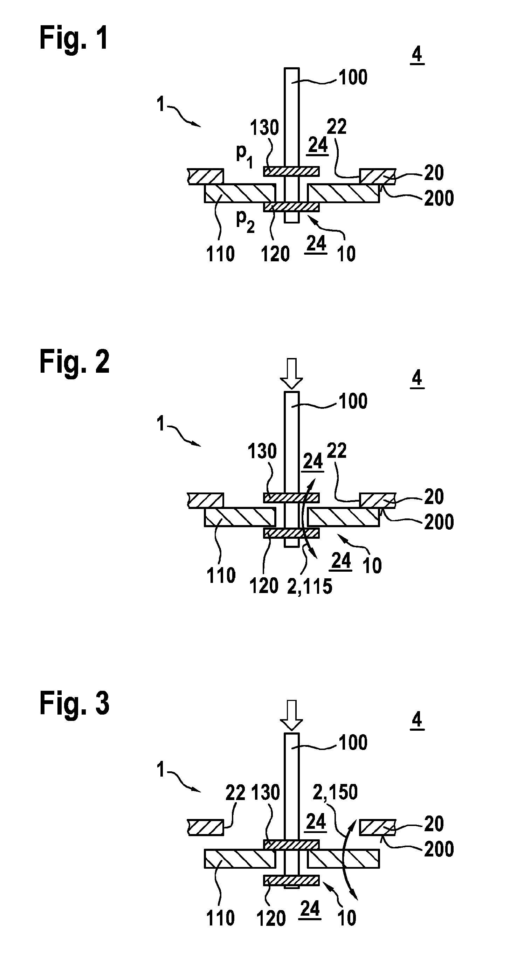

Die Fig. 1 bis 3 verdeutlichen eine Öffnungsbewegung eines Ventilglieds 10 eines erfindungsgemäßen Ventils 1 gegenüber einem Ventilsitz 200 des Ventils 1, wobei der Ventilsitz 200 an einem Ventilkörper 20 vorgesehen ist. Es ist natürlich möglich, den Ventilsitz 200 extern bezüglich des Ventils 1, z. B. an einer Einrichtung 4, einer Vorrichtung 4, einem Gerät 4, einem System 4 etc., vorzusehen; in einem solchen Fall ist der betreffende Abschnitt 20 der Ventilkörper 20. Das bevorzugt als ein diskret schaltendes Ventil 1, ein Digitalventil 1 oder ein Stellglied 1 ausgebildete Ventil 1 weist wenigstens einen Ventilsitz 200 mit einem Durchtrittsquerschnitt 22 für ein Fluid 2 auf. Das Fluid 2 kann ein flüssiges oder ein gasförmiges Medium sein. Im Allgemeinen wird ein solches Fluid 2 auch als Prozessfluid 2 bezeichnet.

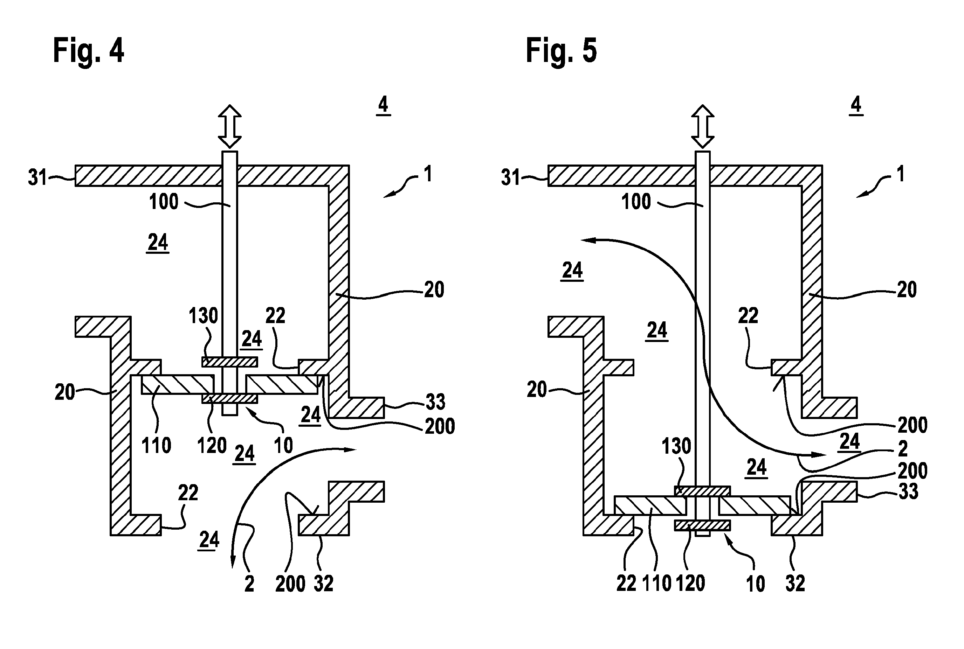

Das Ventil 1 kann natürlich mehr als nur einen Ventilsitz 200 besitzen, wobei mittels einer oder einer Mehrzahl von erfindungsgemäßen Dichtelementanordnungen 110, 120(, 130) ein, zwei oder mehr Ventilsitze 200(, 200) (vgl. die Fig. 1 bis 3 mit den Fig. 3 und 4) gegen das Fluid 2 gemäß der Erfindung gedichtet werden können. - Die Fig. 1 zeigt ein erfindungsgemäßes 2/2-Wegeventil 1 in dessen vollständiger Schließstellung. Der einzige Durchtrittsquerschnitt 22 für das Fluid 2 ist vollständig verschlossen, es kann kein Fluid 2 von einer Hochdruckseite p₂ zu einer Niederdruckseite p₁ des Ventils 1 (p₂ > p₁) gelangen. Es ist natürlich möglich, die Hochdruckseite p₂ mit der Niederdruckseite p₁ zu vertauschen. - Bevorzugt liegt dabei ein erstes Dichtelement 110 am Ventilsitz 200 und ein zweites Dichtelement 120 am ersten Dichtelement 110 dichtend an (vgl. unten).

Für das Öffnen des Ventils 1 bzw. dessen Durchtrittsquerschnitts 22 wird das Ventilglied 10 eine vergleichsweise kurze Strecke bewegt (siehe Pfeil nach unten in der Fig. 2), sodass am/im Ventilglied 10 (vgl. Fig. 2) oder zwischen dem Ventilsitz 200 und dem Ventilglied 10 (nicht dargestellt) ein erster, vergleichsweise kleiner bzw. querschnittskleiner Fluidkanal 115 freigegeben wird, was in der Fig. 2 dargestellt ist, und welche das erfindungsgemäße Ventil 1 in einer partiellen Offenstellung zeigt. Zwischen der Hochdruckseite p₂ und der Niederdruckseite p₁ findet ein Druckausgleich statt (p₂ = _{P1}). - Bevorzugt liegt dabei ein erstes Dichtelement 110 noch dichtend am Ventilsitz 200 an, wobei sich ein zweites Dichtelement 120 von seiner dichtenden Stellung am ersten Dichtelement 110 wegbewegt hat (vgl. unten).

Da das zweite Dichtelement 120 gegenüber dem ersten Dichtelement 110 einen geringeren wirksamen Querschnitt in Bezug auf den hohen Druck p₂ aufweist, ist weniger Energie notwendig, den Druckausgleich zwischen der Hochdruckseite p₂ und der Niederdruckseite p₁ herzustellen. Nur das zweite Dichtelement 120 muss gegenüber dem hohen Druck p₂ bewegt, d. h. geöffnet werden, wobei in der Folge das größere bzw. querschnittsgrößere erste Dichtelement 110 in einem druckausgeglichenem Zustand (p₂ = p₁) bewegt werden kann; d. h. beim Öffnen des ersten Dichtelements 110 müssen lediglich Reibung und/oder Strömungserscheinungen und kein globaler Fluidruck mehr überwunden werden. Hierdurch können hohe Differenzdrücke am/im Ventil 1 mit vergleichsweise kleinen Stellbzw. Motorkräften überwunden werden.

Für das vollständige Öffnen des Ventils 1 bzw. dessen Durchtrittsquerschnitts 22 wird das Ventilglied 10 weiter in Pfeilrichtung bewegt (siehe Pfeil nach unten in der Fig. 3), sodass zwischen dem Ventilsitz 200 und dem Ventilglied 10 (vgl. Fig. 3) oder am/im Ventilglied 10 (nicht dargestellt) ein zweiter, vergleichsweise großer bzw. querschnittsgroßer Fluidkanal 150 freigegeben wird, was in der Fig. 3 dargestellt ist und welche das erfindungsgemäße Ventil 1 in einer vollständigen Offenstellung zeigt. Es herrscht nach wie vor ein druckausgeglichener Zustand zwischen den beiden fluidmechanisch entdrosselten Räumen am Ventilsitz 200. - Bevorzugt hat sich dabei ein erstes Dichtelement 110 von seiner dichtenden Stellung am Ventilsitz 200 wegbewegt (vgl. unten). Hierbei kann der erste Fluidkanal 115 wieder verschlossen sein (vgl. Fig. 3) oder nach wie vor ggf. partiell freigegeben sein (nicht dargestellt).

Gemäß der Erfindung kann das Ventil 1 folgendermaßen ausgebildet sein (siehe Fig. 1 bis 3). Das Ventilglied 10 weist an einem Längsabschnitt seines länglichen Ventilschafts 100, insbesondere einem freien Längsendabschnitt des Ventilschafts 100, das bevorzugt als ein vergleichsweise (querschnitts-)kleines Dichtelement 120 ausgebildete zweite Dichtelement 120 auf. Hierbei ist das zweite Dichtelement 120 fest am Ventilschaft 100 vorgesehen, wobei das zweite Dichtelement 120 am Ventilschaft 100 festgelegt ist (Mehrteiligkeit), oder das zweite Dichtelement 120 ist mit dem Ventilschaft 100 stofflich einstückig verbunden oder integral ausgebildet. Das zweite Dichtelement 120 kann analog zum dritten Dichtelement 130 bzw. vice versa ausgebildet sein (siehe unten).

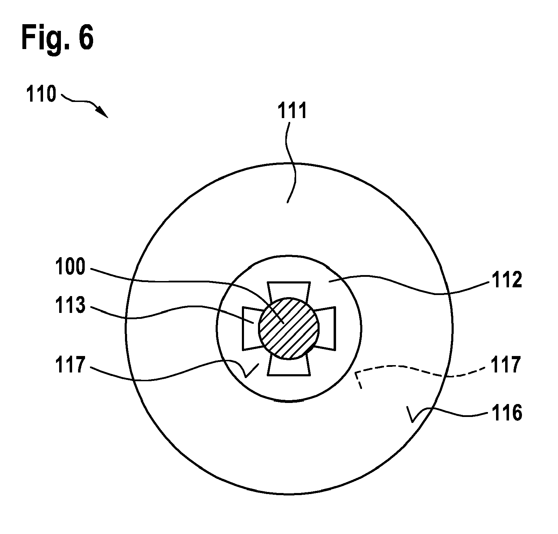

In Längsrichtung des Ventilschafts 100, insbesondere in Richtung einer Betätigungsstelle des Ventilschafts 100 und benachbart, insbesondere direkt benachbart, zum zweiten Dichtelement 120 weist das Ventilglied 10 das bevorzugt als ein vergleichsweise (querschnitts-)großes Dichtelement 110 ausgebildete erste Dichtelement 110 auf. Das erste Dichtelement 110 ist dabei beweglich gegenüber dem Ventilschaft 100 und somit auch beweglich gegenüber dem zweiten 120 und dritten Dichtelement 130 (siehe unten) vorgesehen. Das erste Dichtelement 110 bildet einen eigentlichen Dichtkörper 110 des Ventils 1 und kann ein-(vgl. Fig. 1 bis 3) oder zweiteilig (vgl. Fig. 6) ausgebildet sein. Bevorzugt ist das Dichtelement 110 derart ausgebildet, dass es am Ventilschaft 100 zentriert geführt ist, was z. B. die Ausführungsform der Fig. 6 ermöglicht. Natürlich sind andere als in der Fig. 6 gezeigte Formen der Zentrierung möglich.

Für eine erfindungsgemäße Funktion des Ventils 1 genügen diese beiden Dichtelemente 110, 120, wobei eine Bewegung des ersten Dichtelements 110 gegenüber dem Ventilschaft 100 und weg vom zweiten Dichtelement 120 z. B. von einem Vorsprung, einem Bund o. ä. am Ventilschaft 100 gestoppt werden kann (nicht dargestellt). - Bevorzugt ist jedoch statt eines solchen Vorsprungs das dritte Dichtelement 130 vorgesehen, welches in analoger Weise zum zweiten Dichtelement 120 ausgebildet sein kann. Das dritte Dichtelement 130 befindet sich auf der dem zweiten Dichtelement 120 abgewandten Seite des ersten Dichtelements 110 und ist bevorzugt analog zum zweiten Dichtelement 120 mit dem Ventilschaft 100 verbunden.

D. h. das zweite Dichtelement 120, das erste Dichtelement 110 und das dritte Dichtelement 130 sind zueinander direkt benachbart auf dem Ventilschaft 100 vorgesehen, z. B. aufgefädelt bzw. geschoben. Das zweite Dichtelement 120 und das dritte Dichtelement 130 sind fest mit dem Ventilschaft 100 verbunden, wobei das erste Dichtelement 110 linear bewegbar zwischen dem zweiten Dichtelement 120 und dem dritten Dichtelement 130 auf dem Ventilschaft 100 gelagert, insbesondere gleitgelagert, ist. D. h. zwischen jeweils zwei direkt benachbarten Dichtelementen 120, 110; 110, 130 befindet sich entweder ein durch das erste Dichtelement 110 überbrückbarer Zwischenraum, welcher mit Fluid 2 gefüllt ist, oder das erste Dichtelement 110 liegt am zweiten Dichtelement 120 oder am dritten Dichtelement 130 dichtend an.

Das erste Dichtelement 110 kann sich also entlang des Ventilschafts 100, d. h. im Wesentlichen translatorisch, zwischen den beiden fest mit dem Ventilschaft 100 verbundenen Dichtelementen 120, 130 je nach Kraft- und/oder Druckverhältnissen im Ventil 1 hin- und herbewegen, wobei das dritte Dichtelement 130 ggf. als ein Vorsprung ohne eine Dichtwirkung ausgebildet sein kann (siehe oben). Es ist möglich, das erste Dichtelement 110 am Ventilschaft 100 zu führen, sodass kein wesentlicher rotatorischer Freiheitsgrad des ersten Dichtelements 110 bezüglich des Ventilschafts 100 existiert. Es ist natürlich möglich, das erste Dichtelement 110 gegenüber dem Ventilschaft 100 rotierbar vorzusehen, d. h. das dritte Dichtelement 130 ist lediglich zentriert auf dem Ventilschaft 100 geführt, wie es in der Fig. 6 dargestellt ist.

Gemäß der Erfindung ist eine Fluidpassage 24, welche durch das Ventil 1 hindurchführt mittels des Ventils 1 freigebbar und wieder verschließbar bzw. vice versa. Hierfür ist der Durchtrittsquerschnitt 22 des Ventils 1 durch die erfindungsgemäße Dichtelementanordnung 110, 120(, 130) freigebbar und verschließbar. Beim Freigeben können sukzessive zwei durch das Ventil 1 hindurchführende Fluidkanäle 115, 150 des Durchtrittsquerschnitts 22 freigeben werden. - Zunächst ist dies der erste Fluidkanal 115 (vgl. Fig. 2), welcher bei geringfügig gelüftetem Ventilschaft 100 zwischen dem zweiten Dichtelement 120 und dem ersten Dichtelement 110 freigegeben wird. Im zeitlichen Anschluss daran wird der zweite Fluidkanal 150 (vgl. Fig. 3) bei einem weiter gelüftetem Ventilschaft 100 zwischen dem Ventilsitz 200 und dem ersten Dichtelement 110 freigegeben, wobei der erste Fluidkanal 115 geöffnet, teilweise geöffnet oder auch geschlossen sein kann.

Das Verschließen des Durchtrittsquerschnitts 22 kann in umgekehrter Reihenfolge erfolgen. Ferner kann das Verschließen derart erfolgen, dass beide Fluidkanäle 115, 150 im Wesentlichen im selben Zeitraum und im Wesentlichen parallel zueinander verschlossen werden. Des Weiteren ist es denkbar, dass beim Verschließen zunächst der erste Fluidkanal 115 verschlossen wird und in einem zeitlichen Anschluss daran erst der zweite Fluidkanal 150. - Ferner kann das erfindungsgemäße Ventil 1 derart konstruiert sein, dass beim Freigeben des Durchtrittsquerschnitts 22 zunächst der zweite, größere Fluidkanal 150 und in einem zeitlichen Anschluss daran erst der erste, kleinere Fluidkanal 115 freigegeben wird (nicht dargestellt).

Bei der Ausführungsform nach den Fig. 1 bis 3 befinden sich korrespondierende Dichtflächen für den ersten Fluidkanal 115 am zweiten Dichtelement 120 und am ersten Dichtelement 110, insbesondere an einem bevorzugt vollständig umlaufenden Außenrand des zweiten Dichtelements 120 und einem bevorzugt vollständig umlaufenden Innenrand des ersten Dichtelements 110. Die Dichtflächen des zweiten Dichtelements 120 und des ersten Dichtelements 110 liegen sich in Längsrichtung des Ventilschafts 100 direkt gegenüber. Dies braucht für das 2/2-Wegeventil 1 der Fig. 1 bis 3 für das dritte Dichtelement 130 nicht analog vorgesehen sein, da zwischen dem dritten Dichtelement 130 und dem ersten Dichtelement 110 nicht unbedingt gedichtet werden muss. Es ist jedoch möglich zwischen dem dritten Dichtelement 130 und dem ersten Dichtelement 110 Dichtflächen analog zu den Dichtflächen zwischen dem zweiten Dichtelement 120 und dem ersten Dichtelement 110 auszubilden.

Die korrespondierenden Dichtflächen für den zweiten Fluidkanal 150 befinden sich am Ventilsitz 200 des Ventilkörpers 20 bzw. dem betreffenden Abschnitt 20 (siehe oben) und am ersten Dichtelement 110. Die Dichtfläche des Ventilsitzes 200 ist bevorzugt ein vollständig umlaufender Innenrand und die dazu korrespondierende Dichtfläche des ersten Dichtelements 110 ist bevorzugt ein vollständig umlaufender Außenrand des ersten Dichtelements 110. - Diese wenigstens zwei Dichtflächen des ersten Dichtelements 110 für die beiden Fluidkanäle 115, 150 sind auf einander gegenüberliegenden Seiten (Längsrichtung des Ventilschafts 100) am ersten Dichtelement 110 ausgebildet, wobei es bevorzugt ist, dass die Dichtfläche für den ersten Fluidkanal 115 innen (in den Fig. 1 bis 3 unten am ersten Dichtelement 110) und die Dichtfläche für den zweiten Fluidkanal 150 außen (in den Fig. 1 bis 3 oben am ersten Dichtelement 110) am ersten Dichtelement 110 vorgesehen ist.

Befinden sich zu den Dichtflächen zwischen dem zweiten Dichtelement 120 und dem ersten Dichtelement 110, analoge Dichtflächen zwischen dem dritten Dichtelement 130 und dem ersten Dichtelement 110, so eignet sich das erfindungsgemäße Ventil 1 in besonderer Weise z. B. für ein in den Fig. 4 und 5 dargestelltes 3/2-Wegeventil 1. Es kann hierbei für beide dort dargestellten Ventilsitze 200, 200 bzw. Durchtrittsquerschnitte 22 eine erfindungsgemäße Funktion, also ein sukzessives Freigeben eines betreffenden Durchtrittsquerschnitts 22 durch zwei Fluidkanäle 115, 150, sichergestellt werden kann. Hierbei sind am Ventilglied 10 dann sechs Dichtflächen, vier am ersten Dichtelement 110 und jeweils eine am zweiten Dichtelement 120 und am dritten Dichtelement 130, ausgebildet. - Es ist natürlich möglich, für das in den Fig. 4 und 5 dargestellte Ventil 1 die erfindungsgemäße Funktion nur für einen Durchtrittsquerschnitt 22 zu realisieren.

Bei dem in der Fig. 4 dargestellten 3/2-Wegeventil 1 ist eine obere Fluidpassage 24 bei einem oberen Fluidanschluss 31 des Ventils 1 blockiert, das Fluid 2 kann dessen beide anderen Fluidanschlüsse 32, 33 passieren, was durch den Doppelpfeil in der Fig. 4 verdeutlicht ist. Am ersten, oberen Ventilsitz 200 für den Fluidanschluss 31 dichten das erste Dichtelement 110 gegenüber dem Ventilsitz 200 sowie das zweite Dichtelement 120 gegenüber dem ersten Dichtelement 110. Öffnet sich das Ventilglied 10 vergleichsweise gering, so entsteht am Ventilglied 10 zunächst der erste Fluidkanal 115 (vgl. Fig. 2), ein Druckausgleich mit der oberen Fluidpassage 24 am oberen Fluidanschluss 31, d. h. aller Fluidanschlüsse 31, 32, 33, findet im Ventil 1 statt. Nun kann sich das Ventilglied 10 bzw. das erste Dichtelement 110 vom oberen Ventilsitz 200 wegbewegen, wobei der zweite Fluidkanal 150 (vgl. Fig. 3) zwischen dem Ventilglied 10 und dem Ventilkörper 20 bzw. dem Ventilsitz 200 entsteht. Das Ventilglied 10 ist nun mit vergleichsweise geringer Kraft innerhalb des Ventils 1 hin- und herbewegbar.

Das Ventilglied 10 bewegt sich in einem zeitlichen Anschluss daran auf den zweiten, unteren Ventilsitz 200 am unteren Fluidanschluss 32 zu. Je nach Strömungsverhältnissen im Ventil 1 befindet sich dabei das erste Dichtelement 110 zwischen dem zweiten Dichtelement 120 und dem dritten Dichtelement 130, oder das erste Dichtelement 110 liegt am dritten Dichtelement 130 oder am zweiten Dichtelement 120 an. Das Ventilglied 10 bewegt sich auf den Ventilsitz 200 am Fluidanschluss 32 zu, wobei je nach Strömungsverhältnissen im Ventil 1 der Fluidanschluss 32 im Wesentlichen synchron durch Verschließen beider Fluidkanäle 115, 150 am Ventilglied 10 und zwischen dem Ventilsitz 200 und dem ersten Dichtelement 110 verschlossen wird, oder es schließt zunächst ein erster Fluidkanal 115/150, 150/115 und dann erst ein zweiter Fluidkanal 150/115, 115/150.

Die Fluidpassage 24 ist nun zwischen dem oberen Fluidanschluss 31 und dem rechten Fluidanschluss 33 eingerichtet, was durch den Doppelpfeil in der Fig. 5 verdeutlicht ist. Am unteren Ventilsitz 200 dichten das erste Dichtelement 110 gegenüber dem Ventilsitz 200 des Fluidanschlusses 32 sowie das dritte Dichtelement 130 gegenüber dem ersten Dichtelement 110. - Soll die Fluidpassage 24 wieder zwischen dem unteren Fluidanschluss 32 und dem rechten Fluidanschluss 33 eingerichtet werden (vgl. Fig. 4), so läuft obiger Prozess im Wesentlichen umgekehrt ab. Zunächst wird der erste Fluidkanal 115 und dann erste der zweite Fluidkanal 150 am Fluidanschluss 32 eingerichtet (Druckausgleich). Das Ventilglied 10 kann mit wenig Kraftaufwand in Richtung des oberen Ventilsitzes 200 bewegt werden, wobei in der zeitlichen Folge das erste Dichtelement 110 und das zweite Dichtelement 120 den Durchtrittsquerschnitt 22 am oberen Fluidanschluss 31 verschließen.

Die Fig. 6 zeigt eine mögliche Ausführungsform des erfindungsgemäßen ersten Dichtelements 110, wobei das einstückige erste Dichtelement 110 aus zwei Teilen, einem Außenring 111 und einer Innenscheibe 112, aufgebaut ist. Hierbei ist die Innenscheibe 112 fest mit dem Außenring 111 verbunden, was z. B. durch Einpressen der Innenscheibe 112 in den Außenring 111 bzw. durch Verpressen, mittels eines Klebstoffs, durch Verschweißen (z. B. mittels Laserschweißpunkten) oder Verlöten etc. erfolgen kann. Hierbei übernimmt die Innenscheibe 112 eine Zentrierung des ersten Dichtelements 110 auf dem Ventilschaft 100 des Ventilglieds 10. Eine Verdrehsicherung zwischen der Innenscheibe 112 und dem Ventilschaft 100 kann ebenfalls mittels einer an ihrem Innenrand entsprechend geformten Innenscheibe 112 sowie einem außen dazu komplementär geformten Ventilschaft 100 erfolgen (nicht dargestellt). Es ist natürlich möglich, das erste Dichtelement 110 aus einem einzigen, einfachen Teil auszubilden, d. h. integral auszulegen.

Da die Querschnitte des ersten Dichtelements 110 in Längsrichtung des Ventilschafts 100 bevorzugt symmetrisch ausgebildet sind, zeigt die Fig. 6 eine Oberseite bzw. eine Unterseite des ersten Dichtelements 110. Hierbei sind an einem Außenrand des Außenrings 111 sowie einem Außenrand der Innenscheibe 112 jeweils eine Dichtfläche 116, 117 vorgesehen. Damit das Fluid 2 im Wesentlichen ungedrosselt den ersten Fluidkanal 115 passieren kann, weist das erste Dichtelement 110 bzw. die Innenscheibe 112 wenigstens eine Fluiddurchgangsausnehmung 113 auf. Vorliegend sind eine Mehrzahl, insbesondere zwei, drei, vier oder fünf Fluiddurchgangsausnehmungen 113 symmetrisch verteilt im Querschnitt des ersten Dichtelements 110 bzw. der Innenscheibe 112 vorgesehen, wobei ein Umfang einer jeweiligen Fluiddurchgangsausnehmung 113 vom Ventilschaft 100 begrenz ist. D. h. die Fluiddurchgangsausnehmungen 113 sind nach innen in das erste Dichtelement 110 bzw. die Innenscheibe 112 geöffnet.

Die inneren Begrenzungen bzw. deren Umfangsverbindungen der Fluiddurchgangsausnehmungen 113 konstituieren dabei die Zentrierung des ersten Dichtelements 110 auf dem Ventilschaft 100. Es ist natürlich möglich, das erste Dichtelement 110 mittels einer zentralen Bohrung im ersten Dichtelement 110 bzw. in der Innenscheibe 112 auf dem Ventilschaft 100 zu zentrieren und die Fluiddurchgangsausnehmungen 113 außerhalb der zentralen Bohrung und innerhalb der Dichtfläche 117 einzurichten. Die Fluiddurchgangsausnehmungen 113 bilden einen Abschnitt des ersten Fluidkanals 115, wobei die Fluiddurchgangsausnehmungen 113 je nach einer Stellung des ersten Dichtelements 110 vom zweiten 120 und/oder dritten Dichtelement 130 verschließbar sind.

Die einander betreffenden, d. h. die zueinander korrespondierenden, Dichtflächen des Ventils 1 - also die zwischen dem ersten Dichtelement 110 bzw. dem Außenring 111 und dem oder den Ventilsitzen 200(, 200), sowie die zwischen dem ersten Dichtelement 110 bzw. der Innenscheibe 112 und dem zweiten Dichtelement 120 und/oder dem dritten Dichtelement 130 - sind bevorzugt gerade und/oder geringfügig konisch ausgebildet. Aufgrund einer gewissen mechanischen Elastizität der beteiligten, bevorzugt metallenen, Dichtpartner kann auch eine konische und eine gerade Ausbildung zueinander korrespondierender Dichtflächen zur Anwendung kommen. - Statt die Dichtflächen 117 an einem oberen und/oder unteren Außenrand der Innenscheibe 112 vorzusehen, ist es möglich, einen oder beide Dichtflächen 117 an einem oberen und unteren Innenrand des Außenrings 111 einzurichten, was in der Fig. 6 gestrichelt dargestellt ist.

Die Erfindung besitzt eine breite Anwendbarkeit für sämtliche Fluide, insbesondere Wasser, Gemische mit Wasser, andere Gemische, Lösungen, Öle, Kühl-/Kältemittel, Gase, Luft etc.. Sie ist in den verschiedensten Bereichen, wie z. B. im Non-Automotive-Bereich auf Erd-/Luftwärme, Biomasse, Warmwasser, Heizen, Kühlen, Lüften und/oder Klimatisieren in (Wohn-)Gebäuden sowie bei gewerblichen oder industriellen Klein-, Mittel- und/oder Großanlagen anwendbar. Dies betrifft z. B. Heizgeräte, Wärmepumpen, Speicher, Solarthermiesysteme, eine Warmwasserbereitung, Klimageräte, (Groß-)Kessel, Blockheizkraftwerke, ORC (Organic Rankine Cycle), eine Abwärmenutzung, eine Kraft-Wärme-Kopplung etc. Ferner kann die Erfindung für die Vernetzung von Fluidsystemen angewendet werden. Selbstverständlich kann die Erfindung auch im Automotive-Bereich angewendet werden.

Gemäß der Erfindung ist das vergleichsweise durchmessergroße erste Dichtelement vom vergleichsweise durchmesserkleinen zweiten Dichtelement und/oder vom vergleichsweise durchmesserkleinen dritten Dichtelement bewegbar. Die Fluidpassage bzw. ein betreffender Durchtrittsquerschnitt im Ventil für das Fluid besitzt dabei einen vergleichsweise großen Durchmesser, sodass das das Ventil vorsteuernde zweite Dichtelement und/oder das das Ventil vorsteuernde dritte Dichtelement mit vergleichsweise geringer Kraft bewegt werden können, da das zweite Dichtelement bzw. das dritte Dichtelement gegenüber dem Fluid lediglich einen geringen Wirkquerschitt aufweisen. Hierdurch ist ein Energieverbrauch eines Stell- oder Schrittmotors bzw. -antriebs vergleichsweise gering.

Die eingangs genannten Kriterien Druckverlust im Ventil und maximal erlaubter Differenzdruck am Ventilsitz des Ventils können gemäß der Erfindung besser in Einklang miteinander gebracht werden. Eine Stellkraft des Stell- oder Schrittmotors bzw. -antriebs ist ausreichend, um beide Kriterien zur Zufriedenheit zu erfüllen. Erfindungsgemäß kann ferner der Energieverbrauch des Stell- oder Schrittmotors bzw. -antriebs im Vergleich mit dem Stand der Technik gesenkt sein. Da ein Geräuschpegel des Motors bzw. Antriebs eine Funktion einer Motorkraft ist, ist es gemäß der Erfindung möglich, den Geräuschpegel zu senken. Aufgrund der erfindungsgemäßen Vorsteuerung des Ventils ist es ferner möglich, eine Geräuschentwicklung im Ventil zu reduzieren, was insbesondere bei hin- und herschaltenden 3/2-Wegeventilen von Vorteil ist.

## Patentansprüche

1. Ventil, bevorzugt 3/2-Wegeventil (1), für eine Beeinflussung eines Volumenstroms eines Fluids (2) in der Fluidtechnik, insbesondere der Thermotechnik, mit
einem in einem Ventilkörper (20) bewegbar gelagerten Ventilglied (10) zum Freigeben/Verschließen eines Durchtrittsquerschnitts (22) im Ventilkörper (20) für das Fluid (2), **dadurch gekennzeichnet, dass**
vom Ventilglied (10) beim Freigeben und/oder Verschließen des Durchtrittsquerschnitts (22) zwei Fluidkanäle (115, 150) im Ventil (1) sukzessive freigebbar und/oder sukzessive verschließbar sind.

2. Ventil gemäß Anspruch 1, **dadurch gekennzeichnet, dass** der erste Fluidkanal (115) des Ventils (1) am und/oder im Ventilglied (10) vorgesehen ist, wobei der erste Fluidkanal (115) bevorzugt zwischen einem ersten Dichtelement (110) und wenigstens einem zweiten Dichtelement (120, 130) des Ventilglieds (10) beim Freigeben und/oder Verschließen des Durchtrittsquerschnitts (22) freigebbar und/oder verschließbar ist, und/oder
der zweite Fluidkanal (150) des Ventils (1) zwischen dem Ventilglied (10) und dem Ventilkörper (20) vorgesehen ist, wobei der zweite Fluidkanal (150) bevorzugt zwischen dem ersten Dichtelement (110) und dem Ventilkörper (20) beim Freigeben und/oder Verschließen des Durchtrittsquerschnitts (22) freigebbar und/oder verschließbar ist.

3. Ventil gemäß einem der vorhergehenden Ansprüche, **dadurch gekennzeichnet, dass** das Ventil (1) derart ausgebildet ist, dass beim Freigeben des Durchtrittsquerschnitts (22) zunächst der erste Fluidkanal (115) und in der zeitlichen Folge der zweite Fluidkanal (150) sukzessive freigebbar sind, wobei bei freigegebenem zweiten Fluidkanal (150) der erste Fluidkanal (115) bevorzugt wieder verschließbar ist oder der erste Fluidkanal (115) bevorzugt in einer freigegebenen Stellung verbleibt.

4. Ventil gemäß einem der vorhergehenden Ansprüche, **dadurch gekennzeichnet, dass** das Ventil (1) derart ausgebildet ist, dass
beim Verschließen des Durchtrittsquerschnitts (22) zunächst der zweite Fluidkanal (150) und in einer zeitlichen Folge der erste Fluidkanal (115) sukzessive verschließbar sind, oder
beim Verschließen des Durchtrittsquerschnitts (22) zunächst der erste Fluidkanal (115) und in einer zeitlichen Folge der zweite Fluidkanal (150) sukzessive verschließbar sind, oder
beim Verschließen des Durchtrittsquerschnitts (22) beide Fluidkanäle (115, 150) im Wesentlichen synchron verschließbar sind.

5. Ventil gemäß einem der vorhergehenden Ansprüche, **dadurch gekennzeichnet, dass** das erste Dichtelement (110) beweglich an einem Ventilschaft (100) des Ventilglieds (10) aufgenommen ist, und das zweite Dichtelement (120) und bevorzugt ein drittes Dichtelement (130) fest am Ventilschaft (100) des Ventilglieds (10) aufgenommen ist bzw. sind.

6. Ventil gemäß einem der vorhergehenden Ansprüche, **dadurch gekennzeichnet, dass** das erste Dichtelement (110) beweglich zwischen dem zweiten Dichtelement (120) und dem dritten Dichtelement (130) aufgenommen ist, oder
das erste Dichtelement (110) beweglich zwischen dem zweiten Dichtelement (120) und einem Anschlag (130) am Ventilschaft (100) des Ventilglieds (10) aufgenommen ist, wobei der Anschlag (130) bevorzugt integral mit dem Ventilschaft (100) ausgebildet ist.

7. Ventil gemäß einem der vorhergehenden Ansprüche, **dadurch gekennzeichnet, dass** das erste Dichtelement (110) einen Außenring (111) zum Fluiddichten mit einem Ventilsitz (200) des Ventils (1) und eine Innenscheibe (112) zum Fluiddichten mit dem zweiten Dichtelement (120) und/oder dem dritten Dichtelement (130) umfasst, wobei das erste Dichtelement (110) bevorzugt zweiteilig ausgebildet ist und die Innenscheibe (112) im Außenring (111) festgelegt, insbesondere in den Außenring (111) eingepresst, ist.

8. Ventil gemäß einem der vorhergehenden Ansprüche, **dadurch gekennzeichnet, dass** das erste Dichtelement (110) oder die Innenscheibe (112) des ersten Dichtelements (110) eine Fluidausnehmung (113) für einen Durchtritt des Fluids (2) durch den ersten Fluidkanal (115) aufweist, und/oder
das erste Dichtelement (110) oder die Innenscheibe (112) des ersten Dichtelements (110) am Ventilschaft (100) zentriert geführt sind, wobei der Ventilschaft (100) bevorzugt eine Begrenzung der Fluidausnehmung (113) im ersten Dichtelement (110) oder in der Innenscheibe (112) bildet.

9. Ventil gemäß einem der vorhergehenden Ansprüche, **dadurch gekennzeichnet, dass**:
• das Ventil (1) als ein diskret schaltendes Ventil (1) oder ein Digitalventil (1) ausgebildet ist;
• das Ventilglied (10) im Wesentlichen ausschließlich translatorisch im Ventilkörper (20) bewegbar ist;
• das Ventil (1) ein mit einem Fluiddruck bzw. ein in einer Fluidflussrichtung öffnendes Ventil (1) ist;
• das Ventil (1) ein gegen einen Fluiddruck bzw. ein entgegen einer Fluidflussrichtung öffnendes Ventil (1) ist;
• das Ventil (1) als ein nach innen oder ein nach außen öffnendes Ventil (1) ausgebildet ist; und/oder
• das zweite Dichtelement (120) und das dritte Dichtelement (130) im Wesentlichen analog oder im Wesentlichen identisch ausgebildet sind.

10. Verfahren zum Freigeben/Verschließen einer Fluidpassage (24) durch ein Ventil (1) nach einem der vorhergehenden Ansprüche, bevorzugt ein 3/2-Wegeventil (1), zum Beeinflussen eines Volumenstroms eines Fluids (2) in der Fluidtechnik, insbesondere der Thermotechnik, **dadurch gekennzeichnet, dass**
beim Freigeben und/oder Verschließen der Fluidpassage (24) durch das Ventil (1), die Fluidpassage (24) in wenigstens zwei aufeinanderfolgenden, bevorzugt diskreten Schritten mehr freigegeben und/oder mehr verschlossen wird.

11. Verfahren gemäß Anspruch 10, **dadurch gekennzeichnet, dass**:
• die Fluidpassage (24) beim Verschließen durch das Ventil (1) in einem einzigen Schritt geschlossen wird;
• ein Durchtrittsquerschnitt (22) des Ventils (1) für das Fluid (2) durch ein Freigeben/Verschließen zweier Fluidkanäle (115, 150) im Ventil (1) sukzessive freigebbar und/oder sukzessive verschließbar sind;
• das durch die Fluidpassage (24) hindurchtretende Fluid (2) ein flüssiges oder gasförmiges Medium (2), insbesondere eine wasser- oder ölbasierte Flüssigkeit (2) ist; und/oder
• das Verfahren mittels eines Ventils (1) durchgeführt wird, welches nach einem der Ansprüche 1 bis 9 ausgebildet ist.

12. Einrichtung, Vorrichtung, Gerät oder System für die Fluidtechnik, insbesondere die Thermotechnik, **dadurch gekennzeichnet, dass**
die Einrichtung (4), die Vorrichtung (4), das Gerät (4) bzw. das System (4) ein Ventil (1), bevorzugt ein 3/2-Wegeventil (1), aufweist, welches nach einem der Ansprüche 1 bis 9 ausgebildet ist, und/oder
durch die Einrichtung (4), die Vorrichtung (4), das Gerät (4) bzw. das System (4) ein Verfahren nach einem der Ansprüche 10 oder 11 durchführbar ist und/oder durchgeführt wird.
